(19) Europäisches Patentamt
European Patent Office
Office européen des brevets

(11) **EP 0 666 228 B1**

(12) **EUROPÄISCHE PATENTSCHRIFT**

(45) Veröffentlichungstag und Bekanntmachung des Hinweises auf die Patenterteilung:
**22.10.1997 Patentblatt 1997/43**

(51) Int. Cl.⁶: **B65G 47/32**, B65G 47/82, F16H 21/10

(21) Anmeldenummer: **95100937.2**

(22) Anmeldetag: **25.01.1995**

(54) **Vorrichtung zur seriellen Übergabe von Gegenständen zwischen zwei Fördermitteln**

Device for the serial transfer of articles between two conveyor devices

Dispositif pour le transfert sériel d'objets entre deux moyens de transport

(84) Benannte Vertragsstaaten:
**CH DE GB IT LI NL**

(30) Priorität: **08.02.1994 CH 352/94
11.02.1994 CH 412/94
16.02.1994 CH 469/94**

(43) Veröffentlichungstag der Anmeldung:
**09.08.1995 Patentblatt 1995/32**

(73) Patentinhaber: **ELPATRONIC AG
CH-6303 Zug (CH)**

(72) Erfinder:
• **Meyer, Meinrad
CH-5610 Wohlen (CH)**
• **Summermatter, Peter
CH-8037 Zürich (CH)**

(56) Entgegenhaltungen:
**EP-A- 0 273 135          EP-A- 0 290 765
GB-A- 2 141 987**

• **DR.-ING E.H. KURT HAIN 'Getriebebeispiel-Atlas' 1973 , VDI-VERLAG GMBH , DÜSSELDORF Sechsgliedriges Kurbelgetriebe mit Parallel-Koppelbewegung für Lochstreifenvorschub / 10.1.4.**

**Beschreibung**

Die Erfindung betrifft eine Vorrichtung gemäss den Patentansprüchen zur seriellen Übergabe von Gegenständen zwischen zwei Fördermitteln. Insbesondere betrifft die Erfindung eine Vorrichtung für eine derartige Übergabe, in der die Geschwindigkeit des anliefernden Fördermittels grösser oder gleich gross ist wie die Geschwindigkeit des übernehmenden Fördermittels, derart, dass die Abstände zwischen den angelieferten Gegenständen grösser oder gleich gross sind wie die Abstände zwischen den übergebenen Gegenständen.

Derartige Vorrichtungen kommen beispielsweise zur Anwendung bei der Herstellung von Dosenzargen. Die gerundeten aber noch nicht verschweissten Zargen werden aus einer Rundungsvorrichtung ausgestossen und mit einer Anlieferungsgeschwindigkeit für eine Übergabe angeliefert. Dann werden sie an eine Schweissstation übergeben, durch die sie mit konstanter Schweissgeschwindigkeit gefördert werden, wobei gleichzeitig die achsial ausgerichteten Kanten verschweisst werden. Dabei ist beim Schweissen ein sehr kleiner Abstand zwischen den Zargen gefordert, derart, dass die Schweissgeschwindigkeit üblicherweise kleiner als, höchstens gleich gross ist wie die Anlieferungsgeschwindigkeit. Die Übergabe geschieht üblicherweise mit Hilfe eines Fördernockens, der eine Zarge von hinten anstossend übernimmt diese über eine Auflage stossend über eine Übergabestrecke fördert und dabei verzögert, worauf die Zarge vom Fördermittel der Schweissstation übernommen wird und der Fördernocken für die Übernahme der nächsten Zarge an seinen Ausgangsort zurückkehrt.

Allgemein betrachtet führt der Fördernocken in jedem Takt die folgende Bewegung aus:

- er taucht aus einer Ausgangsposition im Abstand zwischen dem zuletzt angelieferten und dem folgenden Gegenstand (Zargen) von der der Auflage gegenüberliegenden Seite in den seriellen Anlieferungsstrom der Gegenstände ein, vorteilhafterweise mit einer Geschwindigkeit parallel zur allgemeinen Förderrichtung, die grösser ist als die Anlieferungsgeschwindigkeit;
- er holt den vorlaufenden, noch vom anliefernden Fördermittel geförderten Gegenstand ein, indem er wenn notwendig beschleunigt wird;
- er übernimmt den Gegenstand vom anliefernden Fördermittel indem er ihn von hinten anstösst;
- er fördert den übernommenen Gegenstand über die geradlinige Übergabestrecke, wobei er sich, wenn notwendig nach einer anfänglichen Beschleunigung, auf die Übergabegeschwindigkeit (Schweissgeschwindigkeit) verzögert;
- er bleibt durch weitere Verzögerung hinter dem Gegenstand zurück, der bei Erreichen der Übergabegeschwindigkeit vom übernehmenden Fördermittel übernommen worden ist,
- er taucht gegen die der Auflage gegenüberliegende Seite aus dem seriellen Strom der Gegenstände aus;
- er kehrt ausserhalb des seriellen Stromes zurück zu seiner Anfangsposition.

Da die Anlieferungsgeschwindigkeit grösser ist als (höchstens gleich) die Übergabegeschwindigkeit, sind, wie bereits erwähnt, bei der Anlieferung die Abstände zwischen den seriell geförderten Gegenständen grösser als bei der Übernahme durch das übernehmende Fördermittel (Taktzeit muss gleich sein). Dies bedingt, dass der Fördernocken schneller, das heisst mit einem kleineren Umbiegeradius, aus dem seriellen Strom austauchen muss als er eintauchen kann.

Zur Realisierung der beschriebenen, getakteten Bewegung eines derartigen Fördernockens werden gemäss dem Stande der Technik beispielsweise Kurvengetriebe, Kurbeln mit klappbarem Fördernocken oder Koppelgetriebe mit mehreren angetriebenen Achsen eingesetzt. Alle diese Vorrichtungen sind in der Herstellung und mit steigender Betriebsgeschwindigkeit auch im Betrieb aufwendig.

Es ist auch bekannt, dass für die Realisierung einer zyklischen Bewegung eines Fördernockens, wie sie oben beschrieben ist, ein einfaches Gelenkviereck eingesetzt werden könnte. Dabei herrscht aber allgemein die Meinung, derartige Gelenkvierecke seien für hohe Geschwindigkeiten und geforderte hohe Lebensdauer wegen der unvermeidlichen hohen Momentspitzen nicht geeignet. Ferner herrscht die Meinung, dass die Realisierung eines speziellen derartigen Getriebes sehr aufwendig sei, weil für seine Auslegung ein hoher Rechen- und/oder Experimentieraufwand notwendig sei, da zwischen Veränderungen der Getriebeparameter und der Wirkung derartiger Veränderungen kein richtungsmässig einfach erkennbarer Zusammenhang besteht. Aus diesem Grunde wird derartigen Gelenkvierecken üblicherweise aus dem Wege gegangen, obschon ebenfalls bekannt ist, dass deren Herstellung bedeutend weniger aufwendig ist als die Herstellung von beispielsweise Kurvengetrieben. Ein weiterer Grund für die geringe Verbreitung von Gelenkvierecken für Anwendungen wie die oben beschriebene mag sein, dass an einem Gelenkviereck nach seiner Herstellung eigentlich nichts mehr zielgerichtet veränderbar ist. Ein sechsgliedriges Kurbelgetriebe mit Parallel-Koppelbewegung für Lochstreifen-Vorschub ist aus dem Getriebebeispiel-Atlas (Dr. Ing. e.h. Kurt Hain), 1973, VDI-Verlag, Düsseldorf bekannt (S. Abschnitt 10.1.4). Da dieses Kurbelgetriebe ein Grundgelenkviereck beinhaltet, kann es als Vorrichtung gemäß dem Oberbegriff des Anspruchs 1 angesehen werden.

Es ist nun die Aufgabe der Erfindung eine Vorrichtung zur seriellen Übergabe von Gegenständen zwischen zwei Fördermitteln mit einem Getriebe und einem durch das Getriebe angetriebenen Fördernocken zu schaffen, wobei das Getriebe ein Gelenkviereck sein soll. Die Vorrichtung soll bei mindestens so hohen Geschwindigkeiten betreibbar sein wie eine entsprechende Vorrichtung mit einem Kurvengetriebe und sie soll einfach und billig für eine hohe Lebensdauer unterhalten werden können.

Diese Aufgabe wird gelöst durch die Vorrichtung mit einem von einem Gelenkviereck angetriebenen Fördernocken, wie sie in den Patentansprüchen definiert ist.

Die erfindungsgemässe Vorrichtung und ihre Funktion sollen nun anhand der folgenden Figuren näher beschrieben werden. Dabei zeigen:

**Figur 1** die vom Fördernocken auszuführende zyklische Bewegung, wie sie bereits oben beschrieben ist;

**Figur 2** ein Schema einer beispielhaften Ausführungsform des Gelenkviereckes für die erfindungsgemässe Vorrichtung;

**Figur 3** ein Schema einer weiteren beispielhaften Ausführungsform des Gelenkviereckes für die erfindungsgemässe Vorrichtung;

**Figur 4** ein Schema eines Parallelkurbeltriebes für eine Verschiebbarkeit der Bewegung des Fördernockens in x-Richtung.

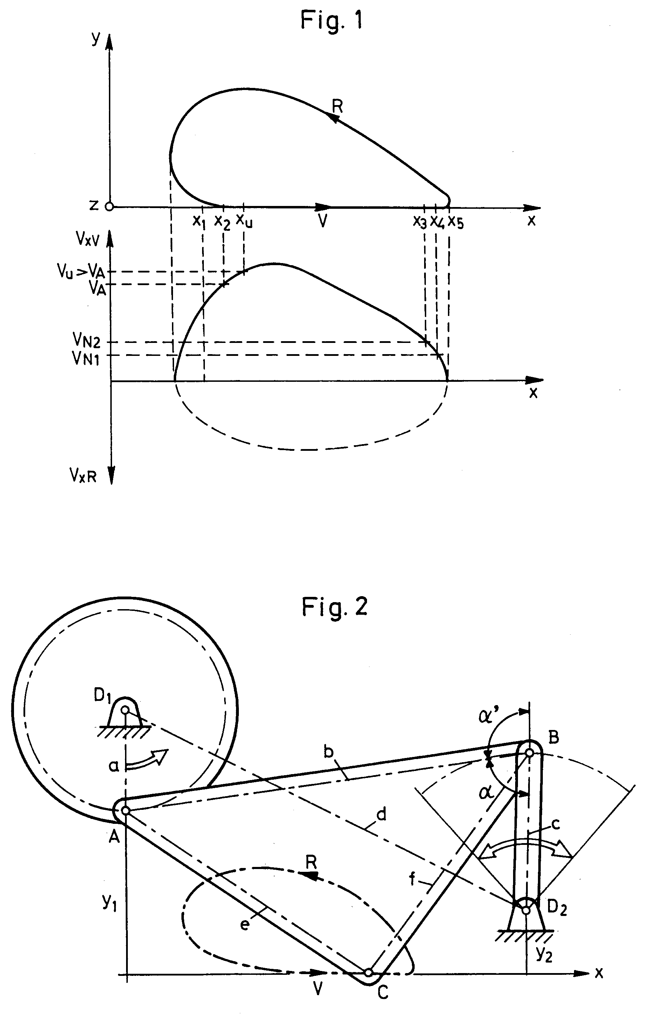

**Figur 1** zeigt in einem willkürlich gewählten Koordinatensystem (x,y,z) schematisch die vom Fördernocken für eine serielle Übergabe auszuführende, zyklische Bewegung und das über diese zyklische Bewegung geforderte Geschwindigkeitsprofil. Die Übergabestrecke V, über die der Födernocken die Gegenstände fördert ist auf der x-Achse angeordnet und die Förderrichtung ist die Richtung der positiven x-Achse. Die Retourbewegung R (wie auch die Vorwärtsbewegung auf der Übergabestrecke V) verläuft in der xy-Ebene. Die z-Achse ist senkrecht zur xy-Ebene ausgerichtet. Im oberen Teil der Figur 1 ist die zyklische Bewegung des Fördernockens in der xy-Ebene aufgezeigt, im unteren Teil das Geschwindigkeitsprofil, das für die serielle Übergabe gefordert werden muss, bzw. die Geschwindigkeitskomponente des Fördernockens in x-Richtung als Funktion der Position des Fördernockens ($v_{xV}$ und $v_{xR}$ als Funktion von x).

Wie bereits eingangs beschrieben, ist die zyklische Bewegung aus einer im wesentlichen gradlinigen Übergabestrecke V und einem Retourweg R zusammengesetzt, wobei der Retourweg auf der Eingangsseite (links in der Darstellung) flacher in die Übergabestrecke münden kann als auf der Ausgangsseite (rechts in der Figur), da auf der Eingangsseite die Abstände zwischen den Produkten grösser sind als auf der Ausgangsseite.

$x_1$ stellt denjenigen Punkt der Bewegungskurve dar, in dem der Fördernocken in den seriellen Strom eintaucht. $x_2$ stellt denjenigen Punkt dar, an welchem der Nocken die Anlieferungsgeschwindigkeit $v_A$ erreicht. Der effektive Übernahmepunkt $x_U$ muss rechts der beiden Punkte $x_1$ und $x_2$ liegen (Nocken eingetaucht und $v_U > v_A$). Je nach Geschwindigkeit $v_{N1}$, $v_{N2}$ des übernehmenden Fördermittels werden die Gegenstände beispielsweise in einem Punkt $x_3$ oder $x_4$ übergeben. Der Nocken taucht dann sehr steil aus dem seriellen Strom aus ($x_5$).

Der Weg des Nockens auf seinem Weg zurück (R) zu seiner Eintauchposition ist von sekundärem Interesse, wie auch das Geschwindigkeitsprofil über diesem Retourweg (gestrichelt $v_{xR}$ als Funktion von x).

Die erfindungsgemässe Vorrichtung soll anwendbar sein für zyklische Bewegungen, wie oben beschrieben, mit einem Nutzhub ($x_1$ bis $x_4$) von ca. 40 bis 200 mm, wobei der Nutzhub mindestens 50% des Gesamthubes (ganze Ausdehnung der Bewegungsspur in x-Richtung) betragen soll. Ferner soll die erfindungsgemässe Vorrichtung anwendbar sein bis zu 600 bis 1200 Zyklen pro Minute (abhängig vom Hub).

**Figur 2** zeigt das Schema einer beispielhaften Ausführungsform eines Gelenkvierecks, das in der erfindungsgemässen Vorrichtung anwendbar ist. Es handelt sich dabei um ein als Kurbelschwinge funktionierendes Gelenkviereck. Es besteht aus einer durch einen Antrieb um die stationäre Gelenkachse $D_1$ rotierend angetriebenen Antriebskurbel a, einer um eine ebenfalls stationäre Gelenkachse $D_2$ drehbaren Abtriebskurbel c und einer um die Gelenkachsen A und B mit der Antriebskurbel und der Abtriebskurbel drehbar verbundenen Koppel b, an der im Bereiche eines Koppelpunktes C (Punkt, der die geforderte Bewegung ausführt) der Fördernocken angeordnet ist. Die Lage des Koppelpunktes C relativ zur Koppel b ist definiert durch die Abstände zwischen C und A bzw. B (Strecken e und f). Die Strecke zwischen $D_1$ und $D_2$ stellt den stationären Hebel d des Gelenkviereckes dar. In der Figur 2 ebenfalls dargestellt ist die Bewegungsspur V/R des Koppelpunktes C, bestehend aus der im wesentlichen gradlinigen Übergabestrecke V, die auf der x-Achse angeordnet ist, und dem Rückweg R.

Alle drei Hebel des Gelenkviereckes (Antriebskurbel, Abtriebskurbel und Koppel) bewegen in Ebenen, die zur xy-Ebene parallel sind, alle Drehachsen $D_1$, $D_2$, A, B sind im wesentlichen parallel zur z-Achse ausgerichtet.

Das Gelenkviereck ist eine Kurbelschwinge, in der die Antriebskurbel a eine vollständige Drehbewegung ausführt, während die Abtriebskurbel c nur innerhalb eines beschränkten Sektors hin und herschwingt.

Im folgenden sollen die Bezeichnungen a, b, c und d sowohl für die Hebel selbst als auch für deren Längen benutzt werden.

Für Kurbelschwingen gelten allgemein die folgenden Bedingungen:

a < c < b < d oder a < b < c < d und (a+d) < (b+c)

oder

a < d < c < b oder a < c < d < b und (a+b) < (c+d)

Für Kurbelschwingen, die für die Lösung der gestellten Aufgabe anwendbar sind, kommen nur Kurbelschwingen in Frage, die eines der beiden Bedingungspaare der oberen Zeile erfüllen, bei denen also der stationäre Hebel d der längste ist.

Zusätzlich zu diesen allgemeinen Bedingungen für eine Kurbelschwinge muss eine Ausführungsform gemäss Figur 2 die folgenden Bedingungen erfüllen:

- Die stationäre Gelenkachse $D_1$ der Antriebskurbel a liegt auf der gleichen Seite der x-Achse wie der Rückweg R der Bewegungsspur des Koppelpunktes C und zwar auf der Eingangsseite der Übergabestrecke V.
- Die freie Gelenkachse A der Antriebskurbel a ist gegen die x-Achse gerichtet, wenn der Koppelpunkt C auf der Übergabestrecke V positioniert ist,
- Die stationäre Gelenkachse $D_2$ der Abtriebskurbel c kann auf beiden Seiten der x-Achse liegen, wobei ihr Abstand $y_2$ von der x-Achse kleiner ist als der Abstand $y_1$ zwischen $D_1$ und der x-Achse. Dabei liegt $D_2$ gegenüber $D_1$ (in x-Richtung) mehr gegen die Ausgangsseite der Übergabestrecke V.
- Die y-Koordinate der freien Gelenkachse B der Abtriebskurbel c ist immer grösser als die y-Koordinate ihrer stationären Gelenkachse $D_2$.
- die Länge der Abtriebskurbel c ist höchstens doppelt so lang wie die Länge der Antriebskurbel a (a < c < 2a).
- Die Länge der Koppel b und die Abstände e und f zwischen Koppelpunkt C und Gelenkachsen A und B unterscheiden sich nicht um mehr als einen Faktor 2 voneinander.
- Der Abstand $y_1$ zwischen $D_1$ und der x-Achse ist kleiner als die Länge der Koppel b und kleiner als die Abstände e und f zwischen Koppelpunkt C Gelenkachsen A und B ($y_1$ < b, e, f).
- Der spitze Winkel $\alpha$ oder $\alpha'$ zwischen der Abtriebskurbel c und der Koppel b ist für jede Position des Gelenkviereckes grösser als 30°. Diese Bedingung muss nur für die geforderten hohen Umdrehungszahlen von 600 bis 1200 pro Minute bei den geforderten Längen des Nutzhubes von 200 bis 40 mm erfüllt sein.

Aus mathematischer Sicht ist das Gelenkviereck bestimmt (Anzahl der Freiheitsgrade gleich Null), wenn es beispielsweise zwei Lager mit einem rotativen Freiheitsgrad parallel zur xy-Ebene, ein Lager mit drei rotativen Freiheitsgraden (Kugelgelenk) und ein Lager mit einem rotativen Freiheitsgrad parallel zur xy-Ebene und einem translatorischen Freiheitsgrad parallel zur z-Achse (Zylindergelenk) aufweist. Es zeigt sich aber, dass ein derartiges, mathematisch bestimmtes Getriebe effektiv unterbestimmt ist, wahrscheinlich wegen des unvermeidbaren minimalen Lagerspiels und der Elastizität der verschiedenen Hebel.

Für die erfindungsgemässe Vorrichtung ist aus diesem Grunde zur Ermöglichung hoher Geschwindigkeiten und einer hohen Lebensdauer ein mathematisch um zwei Freiheitsgrade überbestimmtes Gelenkviereck mit den folgenden Lagern anzuwenden:

- drei Lager mit einem rotativen Freiheitsgrad parallel zur xy-Ebene, die vorteilhafterweise vorgespannt sind und
- ein Lager mit einem rotativen Freiheitsgrad parallel zur xy-Ebene und einem translatorischen Freiheitsgrad parallel zur z-Achse.

Vorteilhafterweise ist das Lager mit zwei Freiheitsgraden das stationäre Lager der Abtriebskurbel.

Für das Gelenkviereck der erfindungsgemässen Vorrichtung sind entsprechende, im Handel erhältliche Lager anwendbar. Diese Lager sind günstig und können einfach ersetzt werden.

Die Antriebskurbel a ist zur Erzeugung ihrer Rotation mit einem Antrieb wirkverbunden, der in der Figur 2 nicht dargestellt ist. Es kann dafür ein Antrieb mit konstanter Winkelgeschwindigkeit zur Anwendung kommen. Soll das für die Bewegung des Fördernockens geforderte Geschwindigkeitsprofil gegenüber dem durch das Gelenkviereck bei konstanter Winkelgeschwindigkeit der Antriebskurbel gelieferten Geschwindigkeitsprofil veränderbar sein, kann zwischen Antrieb und Gelenkviereck ein weiteres Getriebe geschaltet werden oder es kann ein Antrieb mit elektronisch steuerbarer, zyklisch sich verändernder Winkelgeschwindigkeit zur Anwendung kommen.

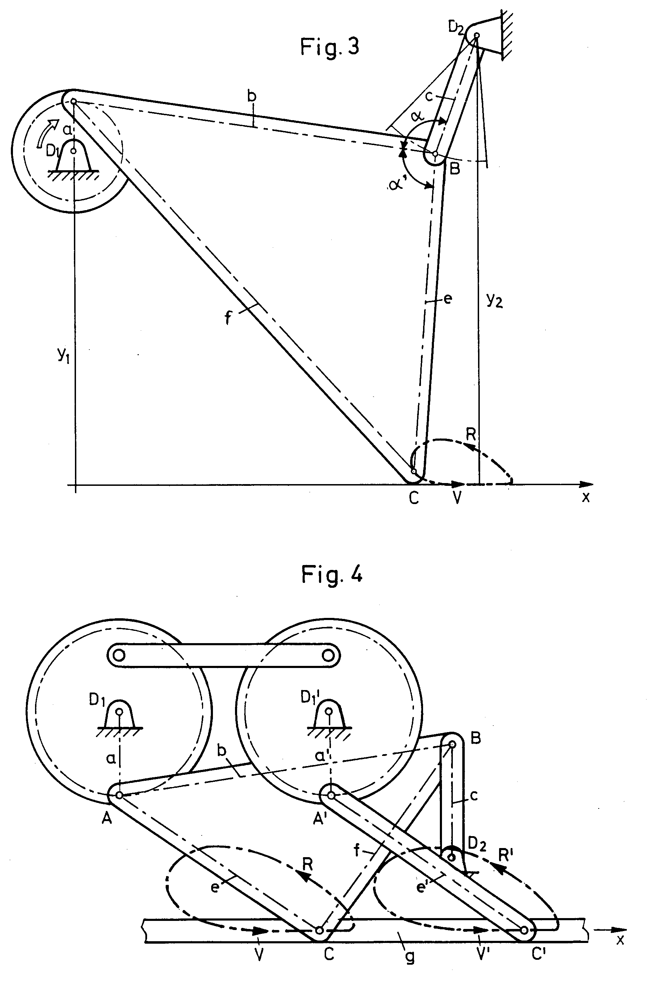

**Figur 3** zeigt ein weiteres Gelenkviereck, das für die erfindungsgemässe Vorrichtung anwendbar ist. Für die einzelnen Teile des Gelenkviereckes sind die gleichen Bezugsziffern verwendet, wie in der Figur 2. Es handelt sich auch hier um eine Kurbelschwinge, die eines der bereits im Zusammenhang mit dem Viereck der Figur 2 genannten zwei allgemeinen Bedingungspaare für Kurbelschwingen erfüllt, nämlich: a < c < b < d oder a < b < c < d und (a + d) < (b + c) . Daneben muss die Kurbelschwinge die folgenden weiteren Bedingungen erfüllen:

- Die stationäre Gelenkachse $D_1$ der Antriebskurbel a liegt auf der gleichen Seite der x-Achse wie der Rückweg R der Bewegungsspur des Koppelpunktes C und zwar auf der Eingangsseite der Übergabestrecke V.
- Die freie Gelenkachse A der Antriebskurbel a ist von der x-Achse weg gerichtet, wenn der Koppelpunkt C auf der Übergabestrecke V positioniert ist,
- Die stationäre Gelenkachse $D_2$ der Abtriebskurbel c liegt auf der gleichen Seite der x-Achse wie der Rückweg R der Bewegungsspur des Koppelpunktes C, wobei der Abstand $y_2$ der stationären Gelenkachse $D_2$ der Abtriebskurbel von der x-Achse grösser ist als der Abstand $y_1$ zwischen $D_1$ und der x-Achse. Dabei liegt $D_2$ gegenüber $D_1$ (in x-Richtung) mehr gegen die Ausgangsseite der Übergabestrecke V.
- Die y-Koordinate der freien Gelenkachse B der Abtriebskurbel c ist immer kleiner als die y-Koordinate ihrer stationären Gelenkachse $D_2$.
- die Länge der Abtriebskurbel c ist höchstens drei mal so lang wie die Länge der Antriebskurbel a (a < c < 3a).
- Die Länge der Koppel b und die Abstände e und f zwischen Koppelpunkt C und Gelenkachsen A und B unterscheiden sich nicht um mehr als einen Faktor 2 voneinander.
- Der Abstand $y_1$ zwischen $D_1$ und der x-Achse ist kleiner als die Länge der Koppel b und kleiner als die Abstände e und f zwischen Koppelpunkt C Gelenkachsen A und B ($y_1$ < b, e, f).
- Der spitze Winkel $\alpha$ oder $\alpha$' zwischen der Abtriebskurbel c und der Koppel b ist für jede Position des Gelerkviereckes grösser als 30°. Diese Bedingung muss nur für die geforderten hohen Umdrehungszahlen von 600 bis 1200 pro Minute bei den geforderten Längen des Nutzhubes von 200 bis 40 mm erfüllt sein.

Wie bereits erwähnt, erzeugen der Koppelpunkte eines Gelenkvierecks, das die im Zusammenhang mit den Figuren 2 oder 3 aufgestellten Bedingungen erfüllt, eine Bewegungskurve, die sich für die Lösung der gestellten Aufgabe eignet. Für spezifische, vorgegebene Bewegungskurven muss innerhalb der gesetzten Bedingungen das spezifisch anwendbare Gelenkviereck gesucht werden.

Im folgenden soll noch als Beispiel ein spezifisches Gelenkviereck beschrieben werden. Dieses Gelenkviereck, das diejenigen Bedingungen erfüllt, die im Zusammenhang mit der Figur 2 beschrieben sind, kann eingesetzt werden für die Übergabe von Dosenzargen von einem anliefernden Fördermittel, auf dem die Zargen mit mindestens 43mm Abstand voneinander angeliefert werden in eine Schweisstation, durch die die Zargen mit einem Abstand von 1mm gefördert werden. Der Nutzhub soll ca. 60mm betragen (abhängig von der Toleranz bezüglich Geradlinigkeit auf der Eingangsseite und von der Übergabegeschwindigkeit auf der Ausgangsseite). Die Abmessungen und Positionen des spezifischen Gelenkviereckes sind in einem Koordinatensystem, in dem der gradlinige Teil der Bewegungsspur (Nutzhub) auf der x-Achse liegt und die stationäre Gelenkachse $D_1$ die y-Achse schneidet (x-Koordinate von $D_1$ ist gleich Null), sind im Millimetern die folgenden (Bezeichnungen und Koordinatensystem siehe Figuren 2 oder 3): $D_1$: 0,00/132,00; $D_2$: 201,00/31,00; a: 51,00; b: 205,00; c: 78,75; e: 145,00; f: 138,00; der Nutzhub dieses Gelenkviereckes erstreckt sich von ca. $x_1$ = 80 bis $x_4$ = 140.

Für die Übergabe von Zargen an eine Schweissstation ist der Übergabepunkt von der Zargenhöhe (Ausdehnung in x-Richtung) abhängig. Sollen bei stationärer Schweissstation Zargen verschiedener Höhe übergeben werden können, muss die Bewegungsspur des Fördernockens in x-Richtung verschiebbar sein. Eine gleiche Verschiebbarkeit ist auch notwendig, wenn beispielsweise der Punkt auf der x-Achse ($x_3$ oder $x_4$ in Figur 1), an dem der zu übergebende Gegenstand die Geschwindigkeit des übernehmenden Fördermittels erreicht und deshalb vom übernehmenden Fördermittel effektiv übernommen wird, für verschiedene Anwendungen mit verschiedenen Übernahmegeschwindigkeiten an derselben Stelle der x-Achse positioniert sein soll. Um eine derartige Verschiebbarkeit zu erreichen, können die beiden stationären Gelenkachsen $D_1$ und $D_2$ auf einem parallel zur x-Achse verschiebbaren Rahmen angeordnet sein.

**Figur 4** zeigt noch eine weitere Möglichkeit zur Verschiebung der Bewegungskurve des Fördernockens bzw. des Koppelpunktes C parallel zur x-Achse. Es handelt sich dabei um einen Parallelkurbeltrieb, der auf einem der oben beschriebenen Gelenkvierecke aufbaut.

Parallel zu einem Gelenkviereck $D_1$/A/B/$D_2$, wie im Zusammenhang mit den Figuren 2 und 3 beschrieben, ist ein weiterer Kurbeltrieb angeordnet, der eine zur Antriebskurbel a parallel und synchron angetriebene zweite Antriebskurbel a' und eine daran angelenkte (Gelenkachse A') reduzierte Koppel e' (gleiche Länge wie e) mit einem weiteren Koppelpunkt C' aufweist. In den beiden Koppelpunkten C und C' ist ein weiterer Hebel g an die beiden Koppeln b und e' angelenkt, dessen Länge derart gewählt wird, dass e und e' parallel zueinander sind. Dieser Hebel g ist in jeder Position der beiden parallelen Getriebe parallel zur Übergabestrecke V (x-Achse) ausgerichtet. Ist nun der Fördernocken verschiebbar auf dem Hebel g oder einer Verlängerung desselben über die Koppelpunkte C und C' hinaus angeordnet, ist seine Bewegungskurve in der dargestellten Art (V/R und V'/R') parallel zur x-Achse verschiebbar, ohne dass die stationären Achsen der Getriebe verschoben werden müssten.

**Patentansprüche**

1. Vorrichtung zur seriellen Übergabe von Gegenständen von einem anliefernden Fördermittel an ein übernehmendes Fördermittel, wobei die Geschwindigkeit des anliefernden Fördermittels grösser ist als oder gleich gross wie die Geschwindigkeit des übernehmenden Fördermittels, welche Vorrichtung einen Fördernocken aufweist, der durch ein Gelenkviereck mit einer Antriebskurbel (a), einer Koppel (b), einer Abtriebskurbel (c) und einem stationären Hebel (d), die miteinander gelenkig verbunden sind, derart antreibbar ist, dass er die zu übergebenden Gegenstände hintereinander in einer im wesentlichen gradlinigen Bewegung über eine Übergabestrecke (V) stösst und ausserhalb des seriellen Stromes von Gegenständen auf einem Rückweg (R) wieder in seine Ausgangsposition zurückkehrt, **dadurch gekennzeichnet**, dass das Gelenkviereck eine Kurbelschwinge ist, für deren Hebellängen gilt: $a < c < b < d$ oder $a < b < c < d$ und $(a + d) < (b + c)$, und dass der Fördernocken im Bereiche eines Koppelpunktes (C) fest an der Koppel (b) angeordnet ist.

2. Vorrichtung nach Anspruch 1, **dadurch gekennzeichnet**, dass für die Kurbelschwinge zusätzlich alle folgenden Bedingungen gelten:

- die stationäre Gelenkachse ($D_1$) der Antriebskurbel (a) liegt auf der gleichen Seite der Verlängerung der Übergabestrecke (V) wie der Rückweg (R) des Koppelpunktes (C) und zwar auf der Eingangsseite der Übergabestrecke (V);
- die freie Gelenkachse (A) zwischen der Antriebskurbel (a) und der Koppel (b) ist gegen die Verlängerung der Übergabestrecke (V) gerichtet, wenn der Koppelpunkt (C) auf der Übergabestrecke (V) positioniert ist,
- die stationäre Gelenkachse ($D_2$) der Abtriebskurbel (c) kann auf beiden Seiten der Verlängerung der Übergabestrecke (V) liegen, wobei ihr Abstand ($y_2$) von der Verlängerung der Übergabestrecke (V) Kleiner ist als der Abstand ($y_1$) zwischen der stationären Gelenkachse ($D_1$) der Antriebskurbel (a) und dieser Verlängerung und wobei die stationäre Gelenkachse ($D_2$) gegenüber der Gelenkachse $D_1$ in Richtung der Übergabestrecke (V) mehr gegen deren Ausgangsseite liegt;
- der Abstand zwischen der Verlängerung der Übergabestrecke (V) und der Gelenkachse (B) der Abtriebskurbel (c) ist für jede Position der Kurbelschwinge grösser als der Abstand zwischen der Verlängerung der Übergabestrecke (V) und der stationären Gelenkachse ($D_2$) der Abtriebskurbel (c);
- die Abtriebskurbel (c) ist höchstens doppelt so lang wie die Antriebskurbel (a);
- die Länge der Koppel (b) und die Abstände (e) und (f) zwischen Koppelpunkt (C) und Gelenkachsen (A) und (B) unterscheiden sich voneinander höchstens um einen Faktor 2;
- Der Abstand ($y_1$) zwischen der stationären Gelenkachse ($D_1$) der Antriebskurbel (a) und der Verlängerung der Übergabestrecke (V) ist kleiner als die Länge der Koppel (b) und kleiner als die Abstände (e) und (f) zwischen Koppelpunkt (C) und den freien Gelenkachsen (A und B).

3. Vorrichtung nach Anspruch 1, **dadurch gekennzeichnet**, dass für die Kurbelschwinge zusätzlich alle folgenden Bedingungen gelten:

- die stationäre Gelenkachse ($D_1$) der Antriebskurbel (a) liegt auf der gleichen Seite der Verlängerung der Übergabestrecke (V) wie der Rückweg (R) des Koppelpunktes (C) und zwar auf der Eingangsseite der Übergabestrecke (V);
- die freie Gelenkachse (A) zwischen der Antriebskurbel (a) und der Koppel (b) ist von der Verlängerung der Übergabestrecke (V) weg gerichtet, wenn der Koppelpunkt (C) auf der Übergabestrecke (V) positioniert ist;
- die stationäre Gelenkachse ($D_2$) der Abtriebskurbel (c) liegt auf der gleichen Seite der Verlängerung der Übergabestrecke (V) wie der Rückweg (R) des Koppelpunktes (C), wobei ihr Abstand ($y_2$) von der Verlängerung der Übergabestrecke (V) grösser ist als der Abstand ($y_1$) zwischen der stationären Gelenkachse ($D_1$) der Antriebskurbel (a) und dieser Verlängerung und wobei die stationäre Gelenkachse ($D_2$) gegenüber der Gelenkachse ($D_1$) in Richtung der Übergabestrecke (V) mehr gegen deren Ausgangsseite liegt;
- der Abstand zwischen der Verlängerung der Übergabestrecke (V) und der Gelenkachse (B) der Abtriebskurbel (c) ist für jede Position der Kurbelschwinge kleiner als der Abstand zwischen der Verlängerung der Übergabestrecke (V) und der stationären Gelenkachse ($D_2$) der Abtriebskurbel (c);
- die Abtriebskurbel (c) ist höchstens drei mal so lang wie die Antriebskurbel (a);
- die Länge der Koppel (b) und die Abstände (e) und (f) zwischen Koppelpunkt (C) und Gelenkachsen (A) und (B) unterscheiden sich voneinander höchstens um einen Faktor 2;
- Der Abstand ($y_1$) zwischen der stationären Gelenkachse ($D_1$) der Antriebskurbel (a) und der Verlängerung der Übergabestrecke (V) ist kleiner als die Länge der Koppel (b) und kleiner als die Abstände (e) und (f) zwischen Koppelpunkt (C) und den freien Gelenkachsen (A und B).

4. Vorrichtung nach einem der Ansprüche 1 bis 3, **dadurch gekennzeichnet**, dass der spitze Winkel ($\alpha$ oder $\alpha$') zwischen der Abtriebskurbel (c) und der Koppel (b) in keiner Position der Kurbelschwinge kleiner ist als 30°.

5. Vorrichtung nach einem der Ansprüche 1 bis 4, **dadurch gekennzeichnet**, dass das Gelenkviereck drei Lager mit je einem rotativen Freiheitsgrad und ein Lager mit einem rotativen Freiheitsgrad und einem translatorischen Freiheitsgrad aufweist.

6. Vorrichtung nach Anspruch 5, **dadurch gekennzeichnet**, dass die Lager mit einem Freiheitsgrad vorgespannt sind.

7. Vorrichtung nach Anspruch 5 oder 6, **dadurch gekennzeichnet**, dass das Lager mit einem rotativen und einem translatorischen Freiheitsgrad das stationäre Lager der Abtriebskurbel (c) ist.

8. Vorrichtung nach einem der Ansprüche 1 bis 7, **dadurch gekennzeichnet**, dass das stationäre Gelenk der Antriebskurbel (a) und das stationäre Gelenk der Abtriebskurbel (c) auf einem parallel zur Übergabestrecke verschiebbaren Rahmen montiert sind.

9. Vorrichtung nach einem der Ansprüche 1 bis 7, **dadurch gekennzeichnet**, dass zusätzlich zum Gelenkviereck und parallel dazu ein weiterer Hebeltrieb mit einer weiteren Antriebskurbel (a') und einer reduzierten Koppel (e') mit einem dem Koppelpunkt (C) entsprechenden weiteren Koppelpunkt (C') vorgesehen ist, wobei an den beiden Koppelpunkten (C und C') ein weiterer Hebel (g) angelenkt ist und der Fördernocken auf diesem Hebel verschiebbar angeordnet ist.

10. Vorrichtung nach einem der Ansprüche 1 bis 9, **dadurch gekennzeichnet**, dass der oder die Antriebskurbeln mit einem Antrieb oder verschiedenen Antrieben wirkverbunden sind, welche Antriebe derart ausgelegt sind, dass damit konstante Winkelgeschwindigkeiten oder zyklisch variierte Winkelgeschwindigkeiten erzeugbar sind.

11. Verwendung der Vorrichtung nach einem der Ansprüche 1 bis 10 zur Übergabe von Dosenzargen zwischen einer Rundungsstation und einer Schweissstation.

12. Vorrichtung nach Anspruch 1 und 2 für die Verwendung nach Anspruch 11, **dadurch gekennzeichnet**, dass sie zur Übergabe von Dosenzargen von einem anliefernden Fördermittel, auf dem die Zargen mit mindestens 43mm Abstand voneinander angeliefert werden, in eine Schweisstation, durch die die Zargen mit einem Abstand von 1mm gefördert werden, eine Kurbelschwinge mit einem Nutzhub von ca. 60mm aufweist, welche Kurbelschwinge in einem Koordinatensystem, in dem der Nutzhub auf der x-Achse verläuft und die x-Koordinate der stationären Gelenkachse ($D_1$) der Antriebskurbel gleich Null ist, die folgenden Abmessungen und Positionen in Millimetern hat: stationäre Gelenkachse der Antriebskurbel ($D_1$): 0,00/132,00; stationäre Gelenkachse der Abtriebskurbel ($D_2$): 201,00/31,00; Länge der Antriebskurbel (a): 51,00; Länge der Koppel (b): 205,00; Länge der Abtriebskurbel (c): 78,75; Abstand zwischen Koppelpunkt und beweglicher Gelenkachse der Antriebskurbel (e): 145,00; Abstand zwischen Koppelpunkt und beweglicher Gelenkachse der Abtriebskurbel (f): 138,00; Lage des Nutzhubes auf der x-Achse: von ($x_1$) ca. 80 bis ($x_4$) ca. 140.

## Claims

1. Device for transfer in series of objects from a delivering conveying means to a receiving conveying means, in which the speed of the delivering conveying means is greater than or equal to the speed of the receiving conveying means, and which device comprises a conveying cam which is driven by a hinge square with a drive crank (a), a coupler (b), a decanting crank (c) and a stationary lever, (d) which are hinged together, so that it pushes objects to be transferred one behind the other in a substantially straightline movement via a transfer path (V) and returns outside the series flow of objects on a return path (R) into its initial position, **characterised in that** the hinge square is a crank rocker of the following lever lengths: a < c < b < d or a < a < b < c < d and (a+d) < (b+c) , and the conveying cam is fixed to the coupler (b) in the area of a coupling point (C).

2. Device according to Claim 1, **characterised in that** all of the following conditions additionally apply to the crank vibrator:

   - the stationary hinge axis ($D_1$) of drive crank (a) lies on the same side of the extension of the transfer path (V) as the return path (R) of coupling point (C), i.e. on the entry side of the transfer path (V);
   - the free hinge axis (A) between the drive crank (a) and the coupler (b) is oriented towards the extension of the transfer path (V) when the coupling point (C) is positioned on the transfer path (V);
   - the stationary hinge axis ($D_2$) of the decanting crank (c) can lie on both sides of the extension of the transfer path (V), and its distance ($y_2$) from the extension of the transfer path (V) is shorter than the distance ($y_1$) between the stationary hinge axis ($D_1$) of the drive crank (1) and this extension, and the stationary hinge axis

($D_2$) lies relative to the hinge axis ($D_1$) in the direction of the transfer path (V) more towards its exit side;
- the distance between the extension of the transfer path (V) and the hinge axis (B) of the decanting crank (c) is for each position of the crank vibrator greater than the distance between the extension of the transfer path (V) and the stationary hinge axis ($D_2$) of the decanting crank (c);
- the decanting crank (c) is maximum twice as long as the drive crank (a);
- the length of the coupler (b) and the distances (e) and (f) between coupling point (C) and hinge axes (A) and (B) differ from each other maximum by a factor 2;
- the distance ($y_1$) between the stationary hinge axis ($D_1$) of the drive crank (a) and the extension of the transfer path (V) is shorter than the length of coupler (b) and shorter than the distances (e) and (f) between coupling point (C) and the free hinge axes (A and B).

3. Device according to Claim 1, **characterised in that** the following conditions additionally apply to the crank vibrator:

- the stationary hinge axis ($D_1$) of the drive crank (a) lies on the same side of the extension of transfer path (V) as the return path (R) of the coupling point (C), i.e. on the entry side of the transfer path (V);
- the free hinge axis (A) between the drive crank (a) and the coupler (b) is oriented away from the extension of the transfer path (V) when the coupling point (C) is positioned on the transfer path (V);
- the stationary hinge axis ($D_2$) of the decanting crank (c) lies on the same side of the extension of the transfer path (V) as the return path (R) of the coupling point (C), and its distance ($y_2$) from the extension of the transfer path (V) is greater than the distance ($y_1$) between the stationary hinge axis ($D_1$) of the drive crank (a) and this extension, and the stationary hinge axis ($D_2$) lies relative to the hinge axis ($D_1$) in the direction of the transfer path (V) more towards its exit side;
- the distance between the extension of the transfer path (V) and the hinge axis (B) of the decanting crank (c) is for each position of the crank vibrator shorter than the distance between the extension of the transfer path (V) and the stationary hinge axis ($D_2$) of the decanting crank (c);
- the decanting crank (c) is maximum three times as long as the drive crank (a);
- the length of the coupler (b) and the distances (e) and (f) between coupling point (C) and hinge axes (A) and (B) differs from each other maximum by a factor 2;
- the distance ($y_1$) between the stationary hinge axis ($D_1$) of the drive crank (a) and the extension of the transfer path (V) is shorter than the length of the coupler (b) and shorter than the distances (e) and (f) between coupling point (C) and the free hinge axes (A and B).

4. Device according to one of Claims 1 to 3, **characterised in that** the acute angle ($\alpha$ or $\alpha$') between the decanting crank (c) and the coupler (b) is in no position of crank vibrator smaller than 30°.

5. Device according to one of Claims 1 to 4, **characterised in that** the square hinge comprises three mounts, each with a rotative degree of freedom and a mount with a rotative degree of freedom and a translatory degree of freedom.

6. Device according to Claim 5, **characterised in that** the mounts are preclamped with a degree of freedom.

7. Device according to Claim 5 or 6, **characterised in that** the mount with a rotative and a translatory degree of freedom is the stationary mount of the decanting crank (c).

8. Device according to one of Claims 1 to 7, **characterised in that** the stationary hinge of the drive crank (a) and the stationary hinge of the decanting crank (c) are mounted on a frame which is displaceable parallel to the transfer path.

9. Device according to one of Claims 1 to 7, **characterised in that** in addition to the square hinge and parallel thereto, a further lever drive with a further drive crank (a') and a reduced couplet (e') with an additional coupling point (C') which corresponds with the coupling point (C) is provided, and onto both coupling points (C and C') is hinged a further lever (g), and the conveyer cam is displaceably arranged on this lever.

10. Device according to one of Claims 1 to 9, **characterised in that** the drive crank(s) is/are operationally connected to a drive or different drives, and these drives are designed in such a manner that they can produce constant angular speeds or cyclic varied angular speeds.

11. Use of the device according to one of Claims 1 to 10 for transfer of can walls between a rounding station and a welding station.

12. Device according to Claim 1 and 2 for use according to Claim 11, **characterised in that** it comprises, for a transfer of can walls from a delivering conveying means on which the walls are delivered at a distance of at least 43 mm between them into a welding station through which the walls are conveyed at a distance of 1 mm, a crank vibrator with an effective lift of 60m, and this crank vibrator has in a co-ordinate system, in which the effective lift extends on the x-axis and the x-co-ordinate of the stationary hinge axis ($D_1$) of the drive crank equals Zero, the following dimensions and positions in millimetres: stationary hinge axis of drive crank ($D_1$): 0.00/132.00; stationary hinge axis of decanting crank ($D_2$): 201.00/31.00; length of drive crank (a): 51.00; length of coupler (b): 205.00; length of decanting crank (c): 78.75; distance between coupling point and movable hinge axis of drive crank (e): 145.00; distance between coupling point and movable hinge axis of decanting crank (f): 138.00; position of effective lift on the x-axis: from ($x_1$) approximately 80 to ($x_4$) approximately 140.

**Revendications**

1. Dispositif pour le transfert en série d'objets d'un moyen de transport de livraison à un moyen de transport de réception, la vitesse du moyen de transport de livraison étant plus élevée ou aussi élevée que la vitesse du moyen de transport de réception, ledit dispositif comprenant un bossage de transport qui peut être entraîné par l'intermédiaire d'un quadrilatère articulé comportant une manivelle d'entraînement (a), une bielle (b), une manivelle entraînée (c) et un levier stationnaire (d), qui sont reliés mutuellement de manière articulée, de sorte qu'il pousse les objets à transférer les uns derrière les autres selon un mouvement sensiblement rectiligne sur un intervalle de transfert (V), et revient en arrière dans sa position de départ sur un chemin de retour (R), en dehors du passage en série des objets, caractérisé en ce que le quadrilatère articulé est un mécanisme à manivelle et bielle oscillante, dont les longueurs de levier vérifient :
a < c < b < d ou a < b < c < d et (a + d) < (b + c) , et en ce que le bossage de transport est disposé de manière fixe sur la bielle (b) dans la zone d'un point (C) de bielle.

2. Dispositif selon la revendication 1, caractérisé en ce que, pour le mécanisme à manivelle et bielle oscillante, toutes les conditions suivantes supplémentaires sont remplies :

   - l'arbre d'articulation ($D_1$) stationnaire de la manivelle d'entraînement (a) est situé du même côté du prolongement de l'intervalle de transfert (V) que le chemin de retour (R) du point (C) de bielle, à savoir du côté de l'entrée de l'intervalle de transfert (V) ;
   - l'arbre d'articulation (A) libre situé entre la manivelle d'entraînement (a) et la bielle (b) est dirigé vers le prolongement de l'intervalle de transfert (V), lorsque le point (C) de bielle est positionné sur l'intervalle de transfert (V) ;
   - l'axe d'articulation ($D_2$) stationnaire de la manivelle entraînée (c) peut être situé des deux côtés du prolongement de l'intervalle de transfert (V), son écartement ($y_2$) vis-à-vis du prolongement de l'intervalle de transfert (V) étant inférieur à l'écartement ($y_1$) entre l'axe d'articulation ($D_1$) stationnaire de la manivelle d'entraînement (a) et ce prolongement, et l'axe d'articulation ($D_2$) stationnaire étant situé, par rapport à l'axe d'articulation ($D_1$), dans la direction de l'intervalle de transfert (V) et plus proche de son côté de sortie ;
   - l'écartement entre le prolongement de l'intervalle de transfert (V) et l'axe d'articulation (B) de la manivelle entraînée (c) est, pour chaque position du mécanisme à manivelle et bielle oscillante, plus important que l'écartement entre le prolongement de l'intervalle de transfert (V) et l'axe d'articulation (D2) stationnaire de la manivelle entraînée (c) ;
   - la manivelle entraînée (c) est au plus deux fois plus longue que la manivelle d'entraînement (a) ;
   - la longueur de la bielle (b) et les écartements (e) et (f) entre le point de bielle (C) et les axes articulés (A) et (B) diffèrent mutuellement au plus d'un facteur 2 ;
   - l'écartement ($y_1$) entre l'axe d'articulation stationnaire ($D_1$) de la manivelle d'entraînement (a) et le prolongement de l'intervalle de transfert (V), est inférieur à la longueur de la bielle (b), et inférieur aux écartements (e) et (f) entre le point de bielle (C) et les axes articulés libres (A) et (B).

3. Dispositif selon la revendication 1, caractérisé en ce que, pour le mécanisme à manivelle et bielle oscillante, toutes les conditions suivantes supplémentaires sont remplies :

   - l'arbre d'articulation ($D_1$) stationnaire de la manivelle d'entraînement (a) est situé du même côté du prolongement de l'intervalle de transfert (V) que le chemin de retour (R) du point (C) de bielle, à savoir du côté de l'entrée de l'intervalle de transfert (V) ;
   - l'arbre d'articulation (A) libre situé entre la manivelle d'entraînement (a) et la bielle (b) est dirigé de manière opposée à partir du prolongement de l'intervalle de transfert (V), lorsque le point (C) de bielle est positionné sur l'intervalle de transfert (V) ;

EP 0 666 228 B1

- l'axe d'articulation ($D_2$) stationnaire de la manivelle entrainée (c) est situé du même côté du prolongement de l'intervalle de transfert (V) que le chemin de retour (R) du point (C) de bielle, son écartement ($y_2$) vis-à-vis du prolongement de l'intervalle de transfert (V) étant supérieur à l'écartement ($y_1$) entre l'axe d'articulation ($D_1$) stationnaire de la manivelle d'entraînement (a) et ce prolongement, et l'axe d'articulation ($D_2$) stationnaire étant situé par rapport à l'axe d'articulation ($D_1$). dans la direction de l'intervalle de transfert (V) et plus proche de son côté de sortie ;
- l'écartement entre le prolongement de l'intervalle de transfert (V) et l'axe d'articulation (B) de la manivelle entraînée (c) est, pour chaque position du mécanisme à manivelle et bielle oscillante, moins important que l'écartement entre le prolongement de l'intervalle de transfert (V) et l'axe d'articulation (D2) stationnaire de la manivelle entraînée (c) ;
- la manivelle entraînée (c) est au plus trois fois plus longue que la manivelle d'entraînement (a) ;
- la longueur de la bielle (b) et les écartements (e) et (f) entre le point de bielle (C) et les axes articulés (A) et (B) diffèrent mutuellement au plus d'un facteur 2 ;
- l'écartement ($y_1$) entre l'axe d'articulation stationnaire ($D_1$) de la manivelle d'entraînement (a) et de l'intervalle de transfert (V), est inférieur à la longueur de la bielle (b), et inférieur aux écartements (e) et (f) entre le point de bielle (C) et les axes articulés libres (A) et (B).

4. Dispositif selon l'une des revendications 1 à 3, caractérisé en ce que l'angle aigu ($\alpha$ ou $\alpha'$) entre la manivelle entraînée (c) et la bielle (b) n'est inférieur à 30° en aucune position du mécanisme à manivelle et bielle oscillante.

5. Dispositif selon l'une des revendications 1 à 4, caractérisé en ce que le quadrilatère articulé présente trois, paliers possédant chacun un degré de liberté en rotation, et un palier possédant un degré de liberté en rotation et un degré de liberté en translation.

6. Dispositif selon la revendication 5, caractérisé en ce que les paliers possédant un degré de liberté sont précontraints.

7. Dispositif selon la revendication 5 ou 6, caractérisé en ce que le palier possédant un degré de liberté en rotation et en translation, est le palier stationnaire de la manivelle entraînée (c).

8. Dispositif selon l'une des revendications 1 à 7, caractérisé en ce que l'articulation stationnaire de la manivelle d'entraînement (a) et l'articulation stationnaire de la manivelle entraînée (c) sont montées sur un châssis pouvant coulisser parallèlement à l'intervalle de transfert.

9. Dispositif selon l'une des revendications 1 à 7, caractérisé en ce que, en plus du quadrilatère articulé et parallèlement à celui-ci est prévue une commande supplémentaire par levier comprenant une manivelle d'entraînement (A') supplémentaire et une bielle réduite (e') comprenant un point de bielle (C') supplémentaire correspondant au point de bielle (C), un levier (g) supplémentaire étant articulé sur les deux points de bielle (C et C'), et le bossage de transport étant disposé coulissant sur ce levier.

10. Dispositif selon l'une des revendications 1 à 9, caractérisé en ce que la ou les manivelles d'entraînement sont reliées de manière active par un entraînement ou différents entraînements, lesdits entraînements étant dimensionnés de sorte que des vitesses angulaires constantes ou des vitesses angulaires variant de manière cyclique puissent être produites.

11. Utilisation du dispositif selon l'une quelconque des revendications 1 à 10, pour le transfert d'ébauches de boîte entre un poste de cintrage et un poste de soudage.

12. Dispositif selon la revendication 1 et 2 pour l'utilisation selon la revendication 11, caractérisé en ce que, pour le transfert d'ébauches de boîte d'un moyen de transport de livraison, sur lequel les ébauches de boîte sont délivrées avec un écartement mutuel d'au moins 43 mm, à un poste de soudage à travers lequel les boîtes sont convoyées avec un écartement de 1 mm, le dispositif présente un mécanisme à manivelle et bielle oscillantes dont la course utile est d'environ 60 mm, lequel mécanisme, dans un système de coordonnées dans lequel la course utile s'étend sur l'axe des (X) et les coordonnées en (X) de l'axe articulé ($D_1$) stationnaire de la manivelle d'entraînement sont égales à zéro, ayant les dimensions et positions suivantes en mm :

axe d'articulation stationnaire ($D_1$) de la manivelle d'entraînement : 0,00/132,00 ;
axe d'articulation stationnaire ($D_2$) de la manivelle entraînée : 201,00/31,00 ;
longueur de la manivelle d'entraînement (a) : 51,00 ;

longueur de la bielle (b) : 205,00 ;

longueur de la manivelle entraînée (c) : 78,75 ;

écartement entre le point de bielle et l'axe d'articulation mobile de la manivelle d'entraînement (e) : 145,00 ;

écartement entre le point de bielle et l'axe d'articulation mobile de la manivelle entraînée (f) : 138,00 ;

position de la course utile sur l'axe des (X) : de ($X_1$) environ 80 à ($X_4$) à environ 140.

# Fig. 1

# Fig. 2

Fig. 3

Fig. 4